# EUROPÄISCHE PATENTSCHRIFT

(11) **EP 0 885 936 B1**
(45) Veröffentlichungstag und Bekanntmachung des Hinweises auf die Patenterteilung: **29.05.2002**
(21) Anmeldenummer: 98110460.7
(22) Anmeldetag: 08.06.1998
(51) Int. Cl.: C09B 67/22, D06P 1/16, C09B 57/02, C09B 57/00, C09B 57/14

(54) **Farbstoffmischungen**
Mixtures of dyes
Mélanges de colorants

(30) Priorität: 19.06.1997 DE 19725946; 29.09.1997 DE 19742912
(43) Veröffentlichungstag der Anmeldung: 23.12.1998
(73) Patentinhaber: DyStar Textilfarben GmbH & Co. Deutschland KG, 65926 Frankfurt am Main (DE)
(72) Erfinder: Geisberger, Andreas, Dr., 67117 Limburgerhof (DE); Grund, Clemens, Dr., 836 Fukuoka-ken (JP); Kusche, Andreas, Dr., 67483 Kleinfischlingen (DE); Reichelt, Helmut, Dr., 67435 Neustadt (DE); Saling, Peter, Dr., 67434 Neustadt (DE); Metzger, Elke, 67146 Deidesheim (DE)

(56) Entgegenhaltungen:
- EP-A- 0 042 090
- EP-A- 0 046 250
- DE-A- 3 447 794

## Beschreibung

Die vorliegende Erfindung betrifft neue Farbstoffmischungen, die jeweils bezogen auf das Gesamtgewicht der roten und gelben Dispersionsfarbstoffe, 55 bis 85 Gew.-% gelbe und 15 bis 45 Gew. -% rote Dispersionsfarbstoffe enthalten, wobei die gelben Dispersionsfarbstoffe den Formeln I oder II 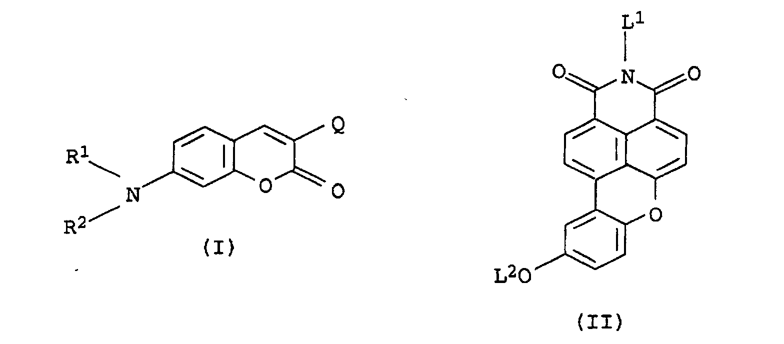 gehorchen, worin
- R¹ und R²: unabhängig voneinander jeweils C₁-C₁₃-Alkyl,
- Q: einen Rest der Formel 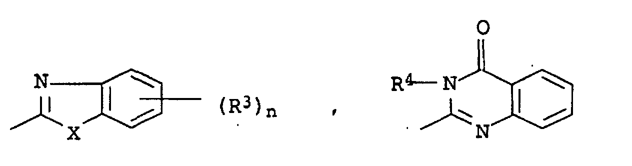
oder 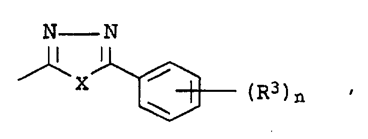 in der
- n: für 1 oder 2,
- R³: für Wasserstoff, C₁-C₆-Alkyl, C₁-C₆-Alkoxy, Halogen, Cyano, Nitro, Carbamoyl, C₁-C₄-Mono- oder Dialkylcarbamoyl, Sulfamoyl oder C₁-C₄-Mono- oder Dialkylsulfamoyl,
- R⁴: für Wasserstoff oder C₁-C₆-Alkyl und
- X: für Imino, C₁-C₄-Alkylimino, Sauerstoff oder Schwefel stehen,
- L¹: C₁-C₁₃-Alkyl, das gegebenenfalls durch ein bis drei Sauerstoffatome in Etherfunktion unterbrochen ist und durch Hydroxy substituiert sein kann, oder Phenyl und
- L²: C₁-C₆-Alkyl bedeuten,
und wobei die roten Dispersionsfarbstoffe den Formeln III oder IV 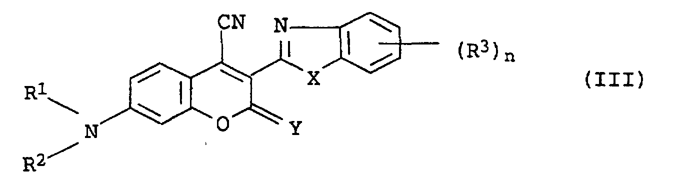 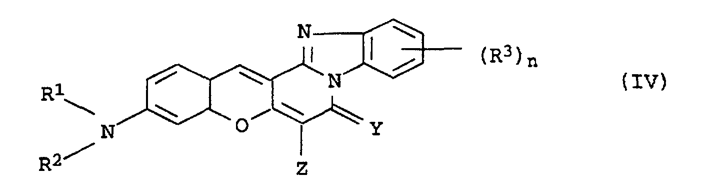 gehorchen, worin
- R¹, R², R³, X und n: jeweils die oben genannte Bedeutung besitzen und
- Y: Sauerstoff oder Imino und
- Z: Cyano oder Carbamoyl bedeuten,
und die, bei Vermessung von mit ihnen behandelten synthetischen oder halbsynthetischen Materialien, ihren Farbort in einem durch Eckpunkte mit den folgenden Koordinaten x und y

| x | y |
|---|---|
| 0,655 | 0,344 |
| 0,579 | 0,341 |
| 0,606 | 0,314 |
| 0,690 | 0,310 |

aufgespannten Farbraum haben und einen Mindestleuchtdichtefaktor β > 0,25 < 0,40 aufweisen, ihre Verwendung zum Färben oder Bedrukken von synthetischen oder halbsynthetischen Materialien sowie ein Verfahren zum Färben von synthetischen oder halbsynthetischen Materialien.

Die Auffälligkeit von Signal- oder Warnkleidung wird durch einen hohen Kontrast zwischen der Kleidung und dem Hintergrund, vor dem die Kleidung gesehen wird, geprägt. Sie ist durch große Flächen des auffälligen Materials festgelegt. Bei der Auswahl der Signaloder Warnfarben muß der Anwender den vorherrschenden Hintergrund, städtische oder ländliche Umgebung, in denen Schutz begehrt wird, berücksichtigen und die Farben so wählen, daß der benötigte Kontrast erreicht wird.

Aus der EP-A-42 090, EP-A-46 250 sowie der DE-A-3 447 794 sind bereits Mischungen von Farbstoffen bekannt, die als Signal- oder Warnfarben zur Anwendung gelangen sollen.

Es hat sich jedoch gezeigt, daß die Materialien des Standes der Technik noch Nachteile aufweisen. So liegt ihr Farbort außerhalb des durch die genannten Eckpunkte aufgespannten Farbraums.

Aufgabe der vorliegenden Erfindung war es nun, neue Farbstoffmischungen, enthaltend Dispersionsfarbstoffe bereitzustellen, die sich in vorteilhafter Weise zur Herstellung von Signal- und Warnkleidung eignet, wobei das mit den Farbstoffmischungen behandelte Material die obengenannten Nachteile nicht mehr aufweisen sollte.

Demgemäß wurden die eingangs näher bezeichneten Farbstoffmischungen gefunden.

Bei dem Farbraum, der durch die Eckpunkte mit den oben genannten Koordinaten x und y aufgespannt wird, sowie beim Mindestleuchtdichtefaktor β handelt es sich um in dieser Technik übliche Begriffe, die dem Fachmann geläufig sind. Sie sind in der Europäischen Norm EN 471 "Warnkleidung" (1994) und den dort genannten Verweisungen, auf die hier ausdrücklich Bezug genommen wird, behandelt.

Synthetische Materialien sind z.B. Polyester, Polyamide oder Polycarbonate. Insbesondere zu nennen sind Materialien in textiler Form, wie Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle (halbsynthetische Materialien), oder Polyamid.

Alle in den hier genannten Formeln auftretenden Alkylreste können sowohl geradkettig als auch verzweigt sein.

Wenn in den hier genannten Formeln substituierte Alkylgruppen auftreten, so weisen diese in der Regel einen oder zwei, vorzugsweise einen Substituenten auf.

Reste L¹, L², R¹, R², R³ und R⁴ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R¹ und R² sind weiterhin z.B. Heptyl, Octyl, 2-Ethylhexyl, Isooctyl, Nonyl, Isononyl, Decyl, Isodecyl, Undecyl, Dodecyl, Tridecyl oder Isotridecyl. [Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. Al, Seiten 290 bis 293, sowie Vol. A 10, Seiten 284 und 285) .]

Reste R³ sind weiterhin z.B. Methoxy, Ethoxy, Propoxy, Isopropoxy, Butoxy, Isobutoxy, sec-Butoxy, tert-Butoxy, Pentyloxy, Isopentyloxy, Neopentyloxy, tert-Pentyloxy, Hexyloxy, Fluor, Chlor, Brom, Mono- oder Dimethylcarbamoyl, Mono- oder Diethylcarbonyl, Monooder Dipropylcarbamoyl, Mono- oder Diisopropylcarbonyl, Monooder Dibutylcarbamoyl, N-Methyl-N-butylcarbamoyl, Mono- oder Dimethylsulfamoyl, Mono- oder Diethylsulfamoyl, Mono- oder Dipropylsulfamoyl, Mono- oder Diisopropylsulfamoyl, Mono- oder Dibutylsulfamoyl oder N-Methyl-N-ethylsulfamoyl.

Reste L¹ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,9-Trioxadecyl, 3,6,9-Trioxaundecyl, 2-Hydroxyethyl, 2- oder 3-Hydroxypropyl, 2- oder 4-Hydroxybutyl, 5-Hydroxypentyl oder 6-Hydroxyhexyl.

Reste X sind z.B. Methylimino, Ethylimino, Propylimino, Isopropylimino oder Butylimino.

Bevorzugte gelbe Dispersionsfarbstoffe sind solche der Formel I, in der R¹ und R² jeweils C₁-C₄-Alkyl, insbesondere Ethyl, bedeuten.

Bevorzugte gelbe Dispersionsfarbstoffe sind weiterhin solche der Formel II, in der L¹ C₁-C₄-Alkyl, das gegebenenfalls einfach durch Hydroxy substituiert ist, und L² Methyl oder Ethyl bedeuten.

Bevorzugte gelbe Dispersionsfarbstoffe sind weiterhin solche der Formel Ia, Ib oder Ic 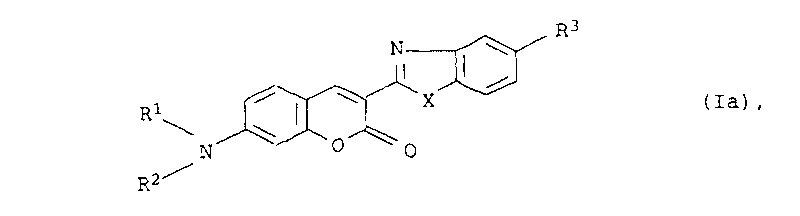 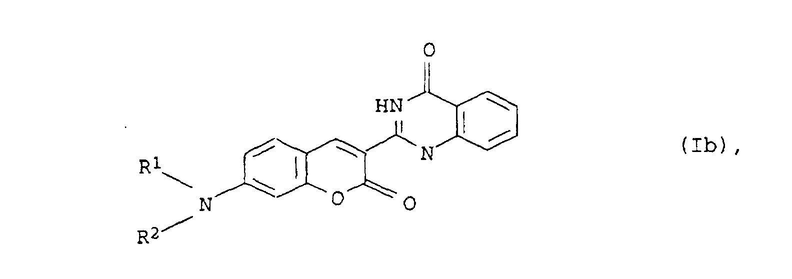 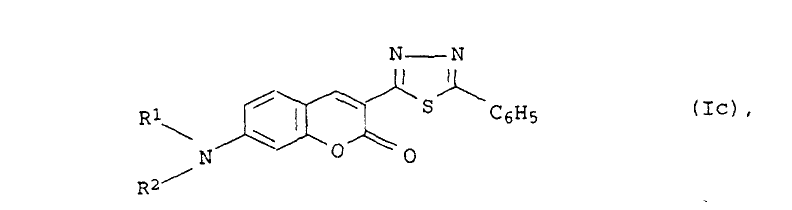 worin R¹, R² und R³ jeweils die obengenannte Bedeutung besitzen und X Imino, Sauerstoff oder Schwefel bedeutet.

Bevorzugte rote Dispersionsfarbstoffe sind solche der Formel IIIa 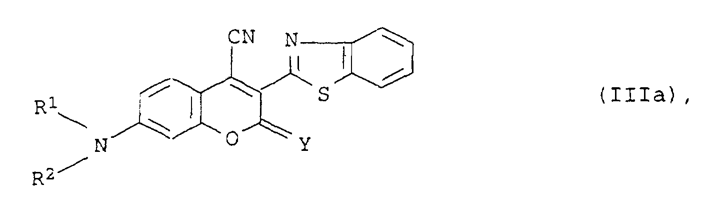 in der R¹, R² und Y jeweils die obengenannte Bedeutung besitzen.

Bevorzugte rote Dispersionsfarbstoffe sind weiterhin solche der Formel IVa 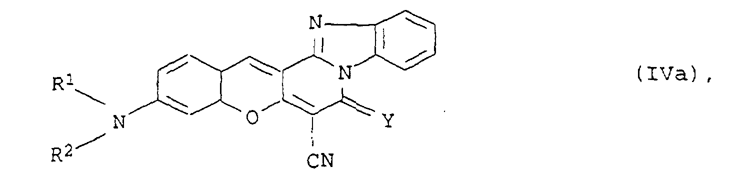 in der R¹, R² und Y jeweils die obengenannte Bedeutung besitzen.

Bevorzugt sind Farbstoffmischungen, enthaltend als rote Dispersionsfarbstoffe mindestens einen Farbstoff der Formel IV, vorzugsweise der Formel IVa, in der Y Sauerstoff bedeutet.

Weiterhin bevorzugt sind Farbstoffmischungen, enthaltend als rote Dispersionsfarbstoffe einen Farbstoff der Formel IV, vorzugsweise der Formel IVa, in der Y Sauerstoff bedeutet und einen Farbstoff der Formel IV, vorzugsweise der Formel IVa, in der Y Imino bedeutet.

Weiterhin bevorzugt sind Farbstoffmischungen, enthaltend als rote Dispersionsfarbstoffe einen Farbstoff der Formel IV, vorzugsweise der Formel IVa, in der Y Sauerstoff bedeutet, einen Farbstoff der Formel IV, vorzugsweise der Formel IVa, in der Y Imino bedeutet und einen Farbstoff der Formel III, vorzugsweise der Formel IIIa.

Besonders bevorzugt sind Farbstoffmischungen, enthaltend als rote Dispersionsfarbstoffe mindestens einen Farbstoff der Formel IVa, in der Y Sauerstoff bedeutet, und als gelbe Dispersionsfarbstoffe, mindestens einen Farbstoff der Formel Ia, Ib und/oder Ic.

Daneben sind Farbstoffmischungen bevorzugt, in denen die Mischungspartner aus einer Kombination der oben aufgeführten bevorzugten Komponenten ausgewählt sind.

In den erfindungsgemäßen Farbstoffmischungen beträgt der Gewichtsanteil der roten Dispersionsfarbstoffe vorzugsweise 70 bis 85 Gew.-% und der der gelben Dispersionsfarbstoffe vorzugsweise 15 bis 30 Gew.-%, jeweils bezogen auf das Gesamtgewicht der roten und gelben Dispersionsfarbstoffe, wobei der Gesamtanteil der Farbstoffe selbstverständlich 100 % ergibt.

Weiterhin bevorzugt sind Farbstoffmischungen, in denen der Gewichtsanteil der roten Dispersionsfarbstoffe der Formel IV, worin Y Sauerstoff bedeutet, 45 bis 80 Gew.-%, der der roten Dispersionsfarbstoffe der Formel IIIa 5 bis 45 Gew.-% und der der gelben Dispersionsfarbstoffe 10 bis 20 Gew.-%, jeweils bezogen auf das Gesamtgewicht der roten und gelben Dispersionsfarbstoffe beträgt, wobei der Gesamtanteil der Farbstoffe selbstverständlich 100 % ergibt.

Weitere Bestandteile der erfindungsgemäßen Farbstoffmischungen können z.B. übliche Hilfsmittel, wie handelsübliche Dispergiermittel, Stellmittel oder Entschäumungsmittel oder Wasser, sein.

Bevorzugt sind solche Farbstoffmischungen, die einen Mindestleuchtdichtefaktor β > 0,30 < 0,40 aufweisen.

Bevorzugt sind weiterhin solche Farbstoffmischungen, die die genannten Bedingungen für Farbort und Mindestleuchtdichtefaktor vor und nach Xenon-Bestrahlung erfüllen. Hinsichtlich des Ausdruckes "Xenon-Bestrahlung" wird auch hier auf die EN 471 Bezug genommen.

Die Herstellung der neuen Farbstoffmischungen erfolgt auf an sich bekannte Weise durch Abmischen der Mischungspartner. Dabei können die roten und gelben Dispersionsfarbstoffe jeweils in Substanz direkt miteinander vermischt werden. Es ist jedoch auch möglich, die roten und gelben Dispersionsfarbstoffe in Form von Farbstoffzubereitungen miteinander zu mischen. Weiterhin können auch Mischungen durch Mischen von Farbstoffen, von denen mindestens einer in Substanz und mindestens einer als Farbstoffzubereitung vorliegt, erhalten werden.

Eine andere Möglichkeit besteht darin, die erfindungsgemäßen Farbstoffmischungen in situ zu erzeugen, d.h. die Mischungspartner getrennt voneinander in die Färbeflotte zu geben, wo sich die Mischungen dann bilden. Dies wiederum kann ebenfalls so geschehen, daß man die Mischungspartner in Substanz und/oder als Farbstoffzubereitung zur Färbeflotte gibt. Die Zugabe in Form von Farbstoffzubereitungen ist dabei bevorzugt.

Ein weiterer Gegenstand der vorliegenden Anmeldung ist daher ein Verfahren zum Färben von synthetischen oder halbsynthetischen Materialien, das dadurch gekennzeichnet ist, daß man die synthetischen oder halbsynthetischen Materialien in der Färbeflotte mit den erfindungsgemäßen Farbstoffmischungen behandelt, wobei man entweder die Farbstoffmischungen in die Färbeflotte gibt oder die Farbstoffmischungen durch getrennte Zugabe der roten und gelben Dispersionsfarbstoffe in die Färbeflotte in situ erzeugt.

Bei den in den erfindungsgemäßen Farbstoffmischungen enthaltenen Farbstoffen handelt es sich im allgemeinen um an sich bekannte Produkte. Sie sind beispielsweise in den in der EP-A-42 090 zitierten Dokumenten oder in der US-A-3 880 869 beschrieben.

Die erfindungsgemäßen Farbstoffmischungen eignen sich in vorteilhafter Weise zum Färben oder Bedrucken vorn synthetischen oder halbsynthetischen Materialien (auch mittels des Ink-Jet-Verfahrens). Die Färbe- und Druckbedingungen sind an sich bekannt und schließen auch das Färben in überkritischem Kohlendioxid mit ein.

Die neuen Farbstoffmischungen haben insbesondere den Vorteil, daß sie bei ihrer Anwendung zur Herstellung von Signal- und Warnkleidung Erzeugnisse ergeben, die eine ausgeprägte Leuchtkraft aufweisen.

Die folgenden Beispiele sollen die Erfindung näher erläutern.

Folgende Farbstoffe kamen in Form von Zubereitungen zur Anwendung.

### Farbstoff 1

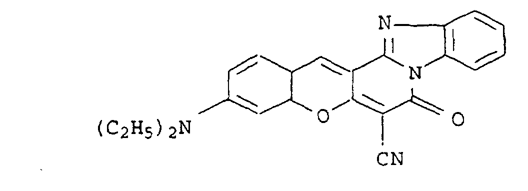

(als 15 Gew.-%ige Zubereitung)

### Farbstoff 2

Dianix® Brillantgelb H10GF-FS
(Mitsubishi Kasei Corp., Tokyo)
(Handelsübliche Zubereitung)

### Farbstoff 3

Resolin® Brillantgelb 10GN 400 %
(Bayer AG, Leverkusen)
(Handelsübliche Zubereitung)

### Farbstoff 4

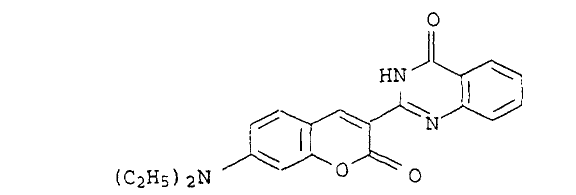

(als 20 gew.-%ige Zubereitung)

### Farbstoff 5

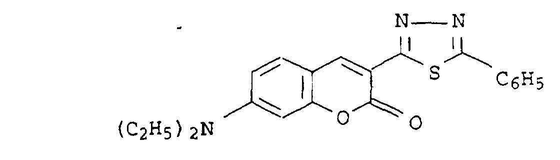

(als 20 gew.-%ige Zubereitung)

### Farbstoff 6

Resolin® Brillant Rot FFB 50 %
(Bayer AG, Leverkusen)
(Handelsübliche Zubereitung)

### A1) HT-Verfahren (in situ Erzeugung der Farbstoffmischung)

W¹ Gew.-% roter Farbstoff (als Zubereitung), W² Gew.-% gelber Farbstoff (als Zubereitung), jeweils bezogen auf das Gewicht des Polyestergewebes, und 10 g Polyestergewebe werden bei einer Temperatur von 50°C in 200 ml einer Färbeflotte gegeben, deren pH-Wert mittels Essigsäure auf 4,5 eingestellt ist. Man behandelt 5 min bei 50°C, steigert dann die Temperatur der Flotte innerhalb von 30 min auf 130°C, hält 60 min bei dieser Temperatur und läßt dann innerhalb von 20 min auf 60°C abkühlen.

Danach wird das ausgefärbte Polyestergewebe oxidativ gereinigt, indem man es 20 min in 200 ml einer Flotte, die 2 ml/l 50 gew.-%ige Natronlauge, 5 ml 30 gew.-%iges wässriges Wasserstoffperoxid und 1 ml/l eines handelsüblichen Peroxidstabilisators enthält, bei 90°C behandelt. Schließlich wird das Gewebe gespült, mit verdünnter Essigsäure neutralisiert, nochmals gespült und getrocknet.

### A2) HT-Verfahren (Farbstoffmischung wird zur Färbeflotte gegeben)

Man verfährt analog A1). Die Färbeflotte enthält W Gew.-%, bezogen auf das Polyestergewebe, Farbstoffmischung.

### B1) Thermosol-Verfahren (in situ Erzeugung der Farbstoffmischung)

Z¹ g/l roter Farbstoff (als Zubereitung) und Z² g/l gelber Farbstoff (als Zubereitung) werden in eine Klotzflotte gegeben, die 2 g/l eines handelsüblichen Netzmittels auf Basis eines Phosphorsäureesters und 10 g/l eines handelsüblichen Antimigrationsmittels auf Basis eines Acrylsäure/Acrylamid-Copolymerisats enthält. Diese Flotte wird mit einer Flottenaufnahme von 50 % auf Polyester-Baumwolle-Mischgewebe (80 : 20) mit Hilfe eines Foulards appliziert. Es folgt eine Zwischentrocknung mit Luftzirkulation bei 100°C. Danach wird 60 sec bei 220°C thermosoliert.

### B2) Thermosol-Verfahren (Farbstoffmischung wird zur Färbeflotte gegeben)

Man verfährt analog B1). Die Klotzflotte enthält Z g/l, bezogen auf das Polyestergewebe, Farbstoffmischung.

Ähnlich günstige Ergebnisse erhält man, wenn man das unter A1) beschriebene Färbeverfahren mit einer Mischung aus zwei roten Farbstoffen [W¹ Gew.-% und W³ Gew.-% (jeweils als Zubereitung)] und einem gelben Farbstoff [W² Gew.-% (als Zubereitung)], wobei sich die Angaben jeweils auf das Gewicht des Polyestergewebes beziehen, durchführt.

Die einzelnen Versuchsdaten sind den folgenden Tabellen 1 und 2 zu entnehmen. Die Werte betreffend die Menge der Farbstoffe beziehen sich jeweils auf die angewandte Farbstoffzubereitung.

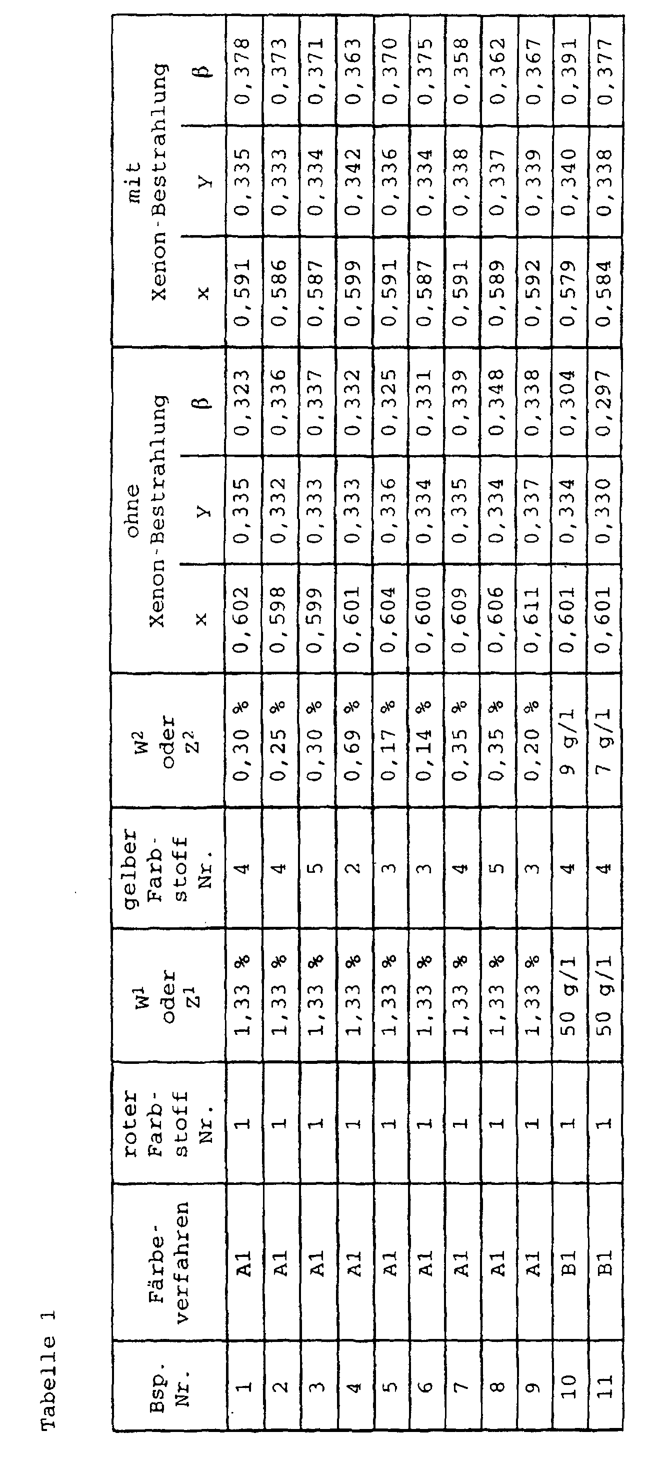

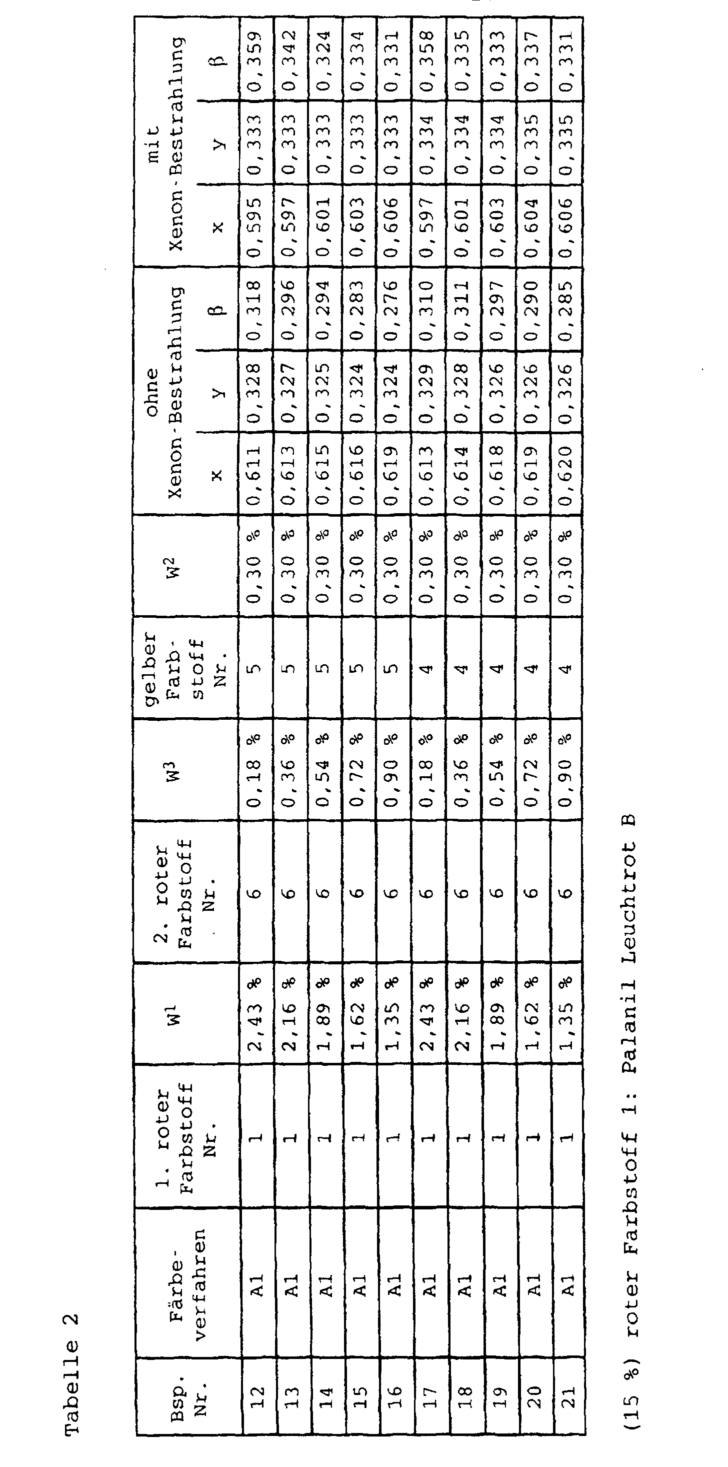

## Patentansprüche

1. Farbstoffmischungen, die, jeweils bezogen auf das Gesamtgewicht der roten und gelben Dispersionsfarbstoffe, 55 bis 85 Gew.-% rote und 15 bis 45 Gew.-% gelbe Dispersionsfarbstoffe enthalten, wobei die gelben Dispersionsfarbstoffe den Formeln I oder II 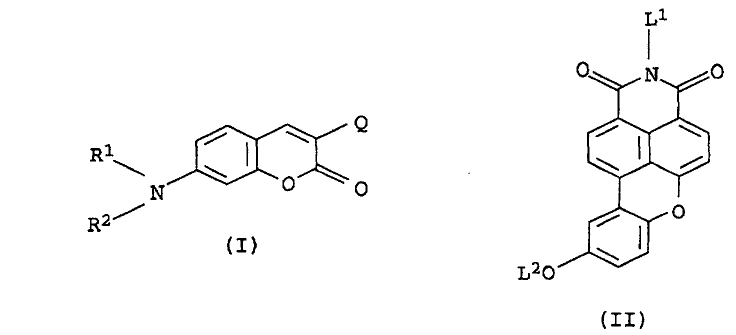 gehorchen, worin
R¹ und R² unabhängig voneinander jeweils C₁-C₁₃-Alkyl,
Q einen Rest der Formel 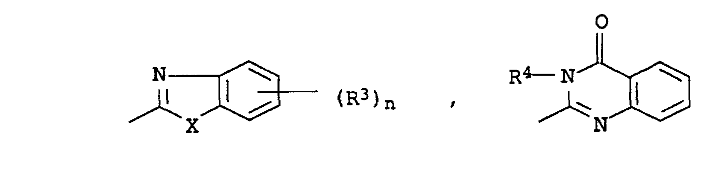
oder 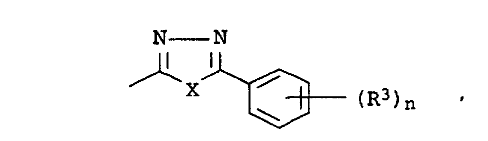 in der
n für 1 oder 2,
R³ für Wasserstoff, C₁-C₆-Alkyl, C₁-C₆-Alkoxy, Halogen, Cyano, Nitro, Carbamoyl, C₁-C₄-Mono- oder Dialkylcarbamoyl, Sulfamoyl oder C₁-C₄-Mono- oder Dialkylsulfamoyl,
R⁴ für Wasserstoff oder C₁-C₆-Alkyl und
X für Imino, C₁-C₄-Alkylimino. Sauerstoff oder Schwefel stehen,
L¹ C₁-C₁₃-Alkyl, das gegebenenfalls durch ein bis drei Sauerstoffatome in Etherfunktion unterbrochen ist und durch Hydroxy substituiert sein kann, oder Phenyl und
L² C₁-C₆-Alkyl bedeuten,
und wobei die roten Dispersionsfarbstoffe den Formeln III oder IV 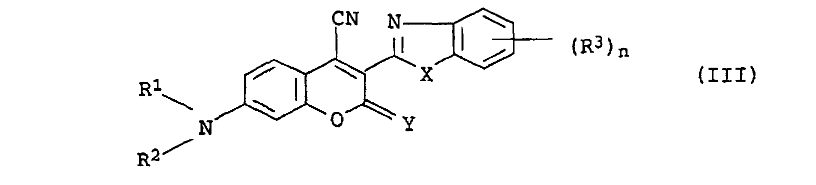 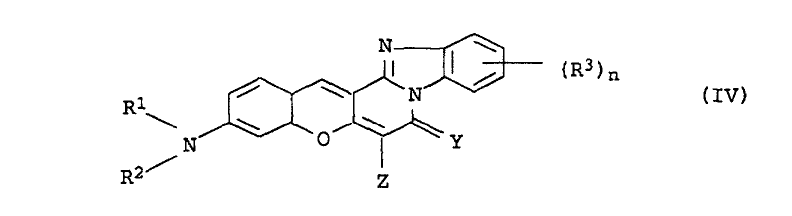 gehorchen, worin
n 1 oder 2,
R¹ und R² unabhängig voneinander jeweils C₁-C₁₃-Alkyl,
R³ Wasserstoff, C₁-C₆-Alkyl, C₁-C₆-Alkoxy, Halogen, Cyano, Nitro, Carbamoyl, C₁-C₄-Mono- oder Dialkylcarbamoyl, Sulfamoyl oder C₁-C₄-Mono- oder Dialkylsulfamoyl,
Y Sauerstoff oder Imino und
Z Cyano oder Carbamoyl bedeuten, und die, bei Vermessung von mit ihnen behandelten synthetischen oder halbsynthetischen Materialien, ihren Farbort in einem durch Eckpunkte mit den folgenden Koordinaten x und y
| x | y |
|---|---|
| 0,655 | 0,344 |
| 0,579 | 0,341 |
| 0,606 | 0,314 |
| 0,690 | 0,310 |
aufgespannten Farbraum haben und einen Mindestleuchtdichtefaktor β > 0,25 < 0,40 aufweisen.

2. Farbstoffmischungen nach Anspruch 1, **dadurch gekennzeichnet, daß** sie einen Mindestleuchtdichtefaktor β > 0,30 < 0,40 aufweisen.

3. Farbstoffmischungen nach Anspruch 1, **dadurch gekennzeichnet, daß** sie die Bedingungen für Farbort und Mindestleuchtdichtefaktor vor und nach Xenon-Bestrahlung erfüllen.

4. Farbstoffmischungen nach Anspruch 1, **dadurch gekennzeichnet, daß** der Gewichtsanteil der roten Dispersionsfarbstoffe 70 bis 85 Gew.-% und der der gelben Dispersionsfarbstoffe 15 bis 30 Gew.-%, jeweils bezogen auf das Gesamtgewicht der roten und gelben Dispersionsfarbstoffe, beträgt.

5. Verfahren zum Färben von synthetischen oder halbsynthetischen Materialien, **dadurch gekennzeichnet, daß** man die synthetischen oder halbsynthetischen Materialien in der Färbeflotte mit den Farbstoffmischungen gemäß Anspruch 1 behandelt, wobei man entweder die Farbstoffmischungen in die Färbeflotte gibt oder die Farbstoffmischungen durch getrennte Zugabe der roten und gelben Dispersionsfarbstoffe in die Färbeflotte in situ erzeugt.

6. Verwendung der Farbstoffmischungen gemäß Anspruch 1 zum Färben oder Bedrucken von synthetischen oder halbsynthetischen Materialien.

## Claims

1. Dye mixtures comprising, based on the total weight of the red and yellow disperse dyes, from 55 to 85% by weight of red and from 15 to 45% by weight of yellow disperse dyes, yellow disperse dyes conforming to the formulae I or II 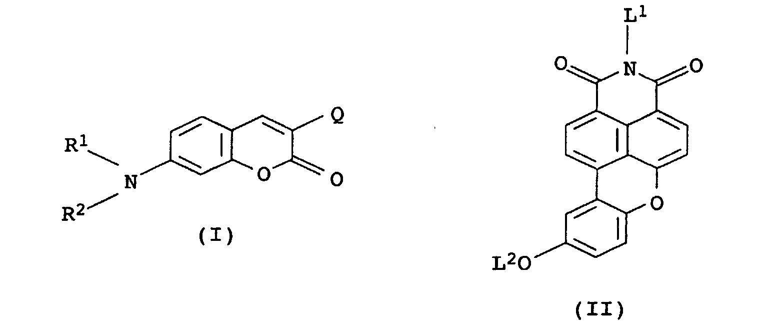 where
R¹ and R² are each independently of the other C₁-C₁₃-alkyl,
Q is a radical of the formula 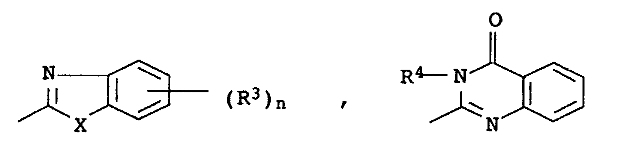
or 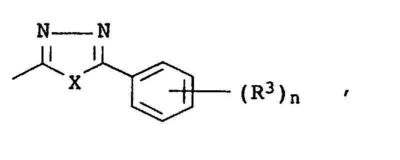 where
n is 1 or 2,
R³ is hydrogen, C₁-C₆-alkyI, C₁-C₆-alkoxy, halogen, cyano, nitro, carbamoyl, C₁-C₄-mono- or dialkylcarbamoyl, sulfamoyl or C₁-C₄-mono- or dialkylsulfamoyl,
R⁴ is hydrogen or C₁-C₆-alkyI, and
X is imino, C₁-C₄-alkylimino, oxygen or sulfur,
L¹ is C₁-C₁₃-alkyl with or without interruption by from one to three oxygen atoms in ether function and with or without hydroxyl substitution, or phenyl, and
L² is Cᵢ-C₆-alkyI,
and the red disperse dyes conforming to the formulae III or IV 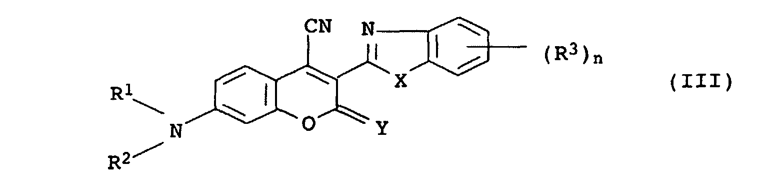 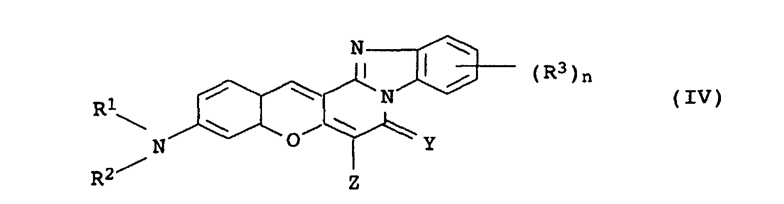 where
n is 1 or 2,
R¹ and R² are each independently of the other C₁-C₁₃-alkyl,
R³ is hydrogen, C₁-C₆-alkyI, C₁-C₆-alkoxy, halogen, cyano, nitro, carbamoyl, C₁-C₄-mono- or dialkylcarbamoyl, sulfamoyl or C₁-C₄-mono- or dialkylsulfamoyl,
Y is oxygen or imino, and
Z is cyano or carbamoyl, and having, on measurement of synthetic or semisynthetic materials treated therewith, a color locus in a color space defined by corner points having the following coordinates x and y:
| x | y |
|---|---|
| 0.655 | 0.344 |
| 0.579 | 0.341 |
| 0.606 | 0.314 |
| 0.690 | 0.310 |
and a minimum luminance factor β > 0.25 < 0.40.

2. Dye mixtures as claimed in claim 1, having a minimum luminance factor β > 0.30 < 0.40.

3. Dye mixtures as claimed in claim 1, meeting the color locus and minimum luminance factor conditions before and after a xenon test.

4. Dye mixtures as claimed in claim 1, wherein the proportion by weight of the red disperse dyes is from 70 to 85% by weight and that of the yellow disperse dyes is from 15 to 30% by weight, based on the total weight of the red and yellow disperse dyes.

5. A process for dyeing synthetic or semisynthetic materials, which comprises treating the synthetic or semisynthetic materials in the dyeing liquor with the dye mixtures of claim 1 either by adding the dye mixtures to the dyeing liquor or by generating the dye mixtures in situ by separate addition of the red and yellow disperse dyes to the dyeing liquor.

6. The use of the dye mixtures of claim 1 for dyeing or printing synthetic or semisynthetic materials.

## Revendications

1. Mélanges de colorants comprenant, dans chaque cas par rapport au poids total des colorants de dispersion rouges et jaunes, de 55 à 85% en poids de colorants de dispersion rouges et de 15 à 45% en poids de colorants de dispersion jaunes, les colorants de dispersion jaunes répondant aux formules I ou II 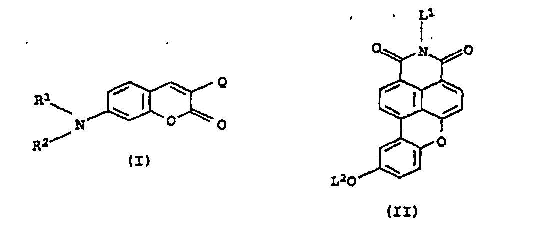 dans lesquelles
R¹ et R² représentent chacun, indépendamment l'un de l'autre, un alkyle en C₁-C₁₃,
Q représente un radical de formules 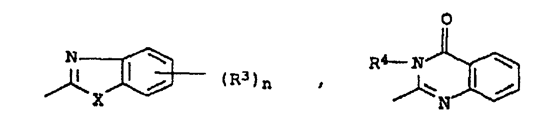
ou 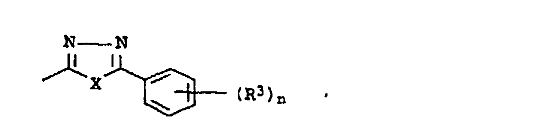 dans lesquelles
n vaut 1 ou 2,
R³ représente un hydrogène, un alkyle en C₁-C₆, un alcoxy en C₁-C₆, un halogène, un cyano, un nitro, un carbamoyle, un C₁-C₄-mono ou dialkylcarbamoyle, un sulfamoyle ou un C₁-C₄-mono ou dialkylsulfamoyle,
R⁴ représente un hydrogène ou un alkyle en C₁-C₆ et
X représente un imino, un C₁-C₄-alkylimino, un oxygène ou un soufre,
L¹ représente un alkyle en C₁-C₁₃ qui est éventuellement interrompu par un à trois atomes d'oxygène dans la fonction éther et peut être substitué par un hydroxy, ou un phényle, et
L² représente un alkyle en C₁-C₆,
et les colorants de dispersion rouges répondant aux formules III ou IV 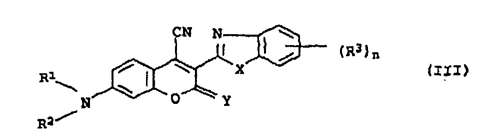 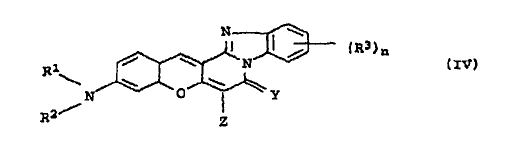 dans lesquelles
n vaut 1 ou 2,
R¹ et R² représentent chacun, indépendamment l'un de l'autre, un alkyle en C₁-C₁₃,
R³ représente un hydrogène, un alkyle en C₁-C₆, un alcoxy en C₁-C₆, un halogène, un cyano, un nitro, un carbamoyle, un C₁-C₄-mono- ou dialkylcarbamoyle, un sulfamoyle ou un C₁-C₄-mono- ou dialkylsulfamoyle,
Y représente un oxygène ou un imino et
Z représente un cyano ou un carbamoyle, et qui présentent, lors de la mesure de matières synthétiques ou semi-synthétiques traitées avec ceux-ci, un lieu de la couleur dans un espace couleur défini par des points d'angle de coordonnées x et y suivantes
| x | y |
|---|---|
| 0,655 | 0,344 |
| 0,579 | 0,341 |
| 0,606 | 0,314 |
| 0,690 | 0,310 |
et un facteur de luminance minimal β > 0,25 < 0,40.

2. Mélanges de colorants selon la revendication 1, **caractérisés en ce qu'**ils présentent un facteur de luminance minimal β > 0,30 < 0,40.

3. Mélanges de colorants selon la revendication 1, **caractérisés en ce qu'**ils satisfont aux conditions pour le lieu de la couleur et le facteur de luminance minimal avant et après une irradiation au xénon.

4. Mélanges de colorants selon la revendication 1, **caractérisés en ce que** la proportion pondérale des colorants de dispersion rouges est de 70 à 85% en poids et celle des colorants de dispersion jaunes est de 15 à 30% en poids, dans chaque cas par rapport au poids total des colorants de dispersion rouges et jaunes.

5. Procédé de teinture de matières synthétiques ou semi-synthétiques, **caractérisé en ce que** les matières synthétiques ou semi-synthétiques sont traitées dans la liqueur de teinture avec les mélanges de colorants selon la revendication 1, soit en ajoutant les mélanges de colorants dans la liqueur de teinture soit en générant les mélanges de colorants in situ en ajoutant séparément les colorants de dispersion rouges et jaunes dans la liqueur de teinture.

6. Utilisation des mélanges de colorants selon la revendication 1, pour la teinture ou l'impression de matières synthétiques ou semi-synthétiques.
